# EUROPEAN PATENT SPECIFICATION

(11) **EP 1 813 884 B1**
(45) Date of publication and mention of the grant of the patent: **22.02.2017**
(21) Application number: 07107173.2
(22) Date of filing: 10.05.2004
(51) Int. Cl.: F28F 13/12, F28D 21/00, F28D 7/16, F24H 8/00, F28F 3/12, F28D 9/00

(54) **A condensing unit**
Kondensationseinheit
Unité de condensation

(30) Priority: 08.05.2003 IE 20030347; 31.07.2003 IE 20030573
(43) Date of publication of application: 01.08.2007
(62) Divisional of application: 04394025.3
(73) Proprietor: ALLEY ENTERPRISES LIMITED, Birr, County Offaly (IE)
(72) Inventor: Grant, Stephen William John, County Offaly (IE)
(74) Representative: O'Connor, Donal Henry

(56) References cited:
- EP-A- 0 965 802
- EP-A2- 0 271 434
- EP-A2- 0 945 688
- GB-A- 2 373 841
- GB-A- 2 408 565

## Description

The present invention relates to a condensing unit for water heating boilers.

Such a condensing unit is often used for connection to a water heating boiler in a water heating system, the boiler having a boiler system water outlet and a boiler system water return inlet for connection respectively to a system boiler feed pipe and a system water return pipe and a boiler gas outlet for connection to an exhaust gas flue inlet, the condensing unit comprising an exhaust flue passageway for connection between the boiler gas outlet and the exhaust gas flue inlet, a water jacket surrounding most of the exhaust flue passageway for heat transfer between the water jacket having a water jacket inlet for connection to the system boiler return pipe and a water jacket outlet for connection to the boiler system return inlet. Essentially, the condensing unit acts as a pre-heater for the boiler input water, namely, the system return water.

However, under certain conditions, when the system water feeding the condensing unit is at a relatively low temperature, the exhaust gases will be cooled below the dew point of certain of the components of the exhaust gases. These components will then condense giving up the latent heat of condensation. Accordingly, under these conditions, the actual efficiency of the boiler could exceed a nominal 100%, that is to say, the actual heat input of the burning fuel such as oil or gas, will exceed the theoretically possible heat exchange between the burning fuel and the system water. The additional heat is provided by the condensing of components of the exhaust gases.

Generally, the water entering the condenser or condensing unit is of the order of 30°C and the water outlet, having been heated by the flue gases, is of the order of 50°C. The flue gases which originally enter the condensing unit at approximately 180°C are cooled to approximately 45°C and thus condensation occurs. However, if the water entering the condensing unit is at approximately 55°C, it would tend to be delivered out of the condensing unit and into the boiler, that is, very often, the boiler return pipe, at 75°C. Then, the flue gases will usually be of the order of 190°C dropping to 65°C without condensation.

The main problem with the use of such condensing units, either in conjunction with the boiler as an add-on attachment or integrally mounted within the boiler, is the need to achieve efficient heat transfer while, at the same time, providing a relatively easily maintained unit.

There are considerable advantages in providing a stand alone add-on unit, in that such an add-on unit or add-on attachment allows it to be used in conjunction with previously fitted boilers. Further, and even more importantly, it can be mounted beside the boiler and thus takes up relatively little space, which can often be a consideration, particularly where boilers are mounted under worktops in kitchens and such areas.

The present invention is directed towards providing a condensing unit that will achieve some of these aims.

GB 2 373 841 and EP 0965802 disclose secondary heat exchange units for connection to a boiler to pre-heat water by means of boiler exhaust gases prior to delivery of the water to the boiler for heating in the boiler.

### Statements of Invention

According to the invention, there is provided a condensing unit for connection to a water heating boiler in a water heating system, the boiler having a boiler system water outlet and a boiler system water return inlet for connection respectively to a system boiler feed pipe and a system water return pipe and a boiler gas outlet for connection to an exhaust gas flue inlet, the condensing unit comprising a freestanding main enclosure having an exhaust gas flue passageway for connection between the boiler gas outlet and the exhaust gas flue inlet, a water jacket arranged for heat transfer between the water jacket and the exhaust gas flue passageway, the water jacket having a water jacket inlet for connection to the system boiler return pipe and a water jacket outlet for connection to the boiler system return inlet, the exhaust gas flue passageway comprises a pair of spaced-apart manifolds, namely, a main manifold divided into an inlet manifold having a gas passageway inlet for connection to the boiler gas outlet and an outlet manifold having a passageway outlet for connection to the exhaust gas flue inlet and a transfer manifold and at least one gas transfer conduit between each of the inlet and outlet manifolds and the transfer manifold; characterised in that:
the water jacket surrounds most of the exhaust gas flue passageway; and
wherein the water jacket comprises a main tank having substantially parallel extension tanks projecting therefrom and abutting against a cover plate of the condensing unit, the cover plate, extension tanks and the main tank forming the plurality gas conduits therebetween.

There are major advantages with this construction. By having a freestanding unit, it is possible to mount the unit in conjunction with existing boilers and thus ensure that the heating efficiency of existing boilers is greatly enhanced. Heretofore, such units were always incorporated within the boiler and thus to provide a condensing unit essentially required the provision of a new boiler. Further, the particular construction allows easy cleaning and an efficient heat transfer because the flue gases are led back and forth across the condensing unit, greatly enhancing heat transfer. The whole purpose is to cool the exhaust gases from the boiler as much as possible so that condensation will occur. This particular construction allows such cooling. The more heat that could be extracted from the flue gases, the better.

Furthermore, the cover plate can also be in the form of another water tank communicating with the main tank. Again, this is a relatively simple construction and particularly when the cover plate is simply a plain cover plate, it can be easily removed for cleaning.

This particular construction is relatively efficient to clean, efficient to manufacture and gives amazingly good heat transfer.

In another embodiment of the invention, the water jacket comprises an internal partial divider wall dividing the water jacket into two separate tanks interconnected adjacent the transfer manifold, one tank in contact with the gas transfer conduit between the inlet and transfer manifolds, the other with the gas transfer conduit between the outlet and transfer manifolds.

Ideally, the main enclosure is adapted to lie against the side of the boiler in close proximity thereto or on top of the boiler.

In another embodiment a system comprising a condensing unit as claimed is provided in combination with a gas transfer duct for connection between the passageway inlet and the boiler to facilitate mounting the condensing unit on top of a boiler.

In another embodiment a system comprising a condensing unit as claimed is provided in combination with a boiler with a cover over the boiler gas outlet which is divided into two exhaust gas manifolds with one manifold having an exhaust outlet for connection to the exhaust gas flue inlet and wherein the cover plate of the condensing unit is formed from an insulation material having a hole forming a transfer passageway between the exhaust manifold and an inlet manifold and a further transfer passageway between the outlet manifold and the exhaust manifold.

### Detailed Description of the Invention

The invention will be more clearly understood from the following description of some embodiments thereof, given by way of example only, with reference to the accompanying drawings, in which:
Fig. 1 is a schematic exploded view of a condensing unit fitted in a heating system,
Fig. 2 is a perspective partially cut-away view of the condensing unit of Fig. 1,
Fig. 3 is a typical diagrammatic section through the condensing unit,
Fig. 4 is a perspective partially cut-away view of another condensing unit according to the invention,
Fig. 5 is a perspective view of a still further condensing unit according to the invention,
Fig. 6 is a plan sectional view of the condensing unit of Fig. 5.
Fig. 7 is a typical vertical sectional view of the condensing unit of Fig. 6, and Fig. 8 is a perspective view of an alternative construction of condensing unit affixed to a boiler.

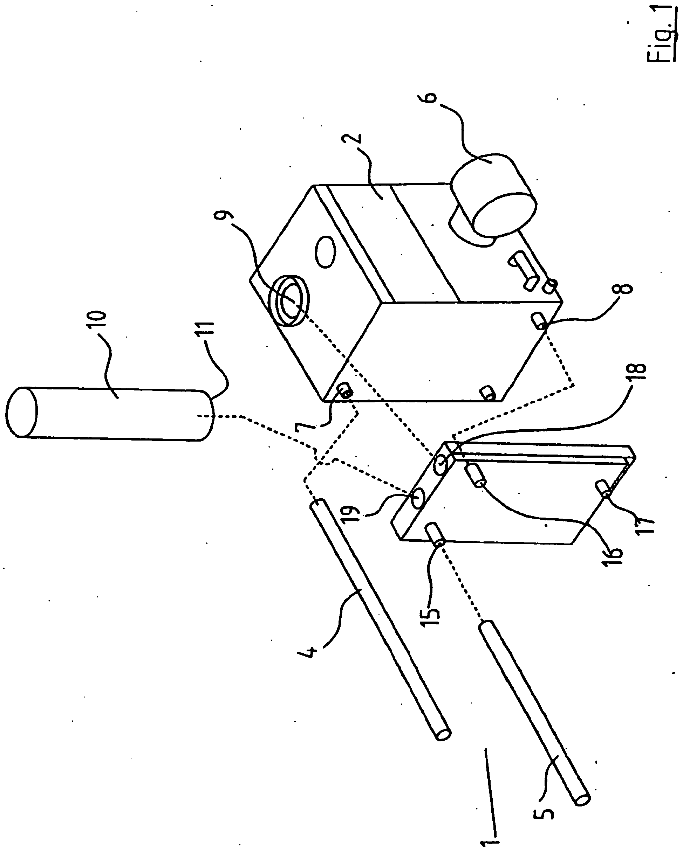

Referring to the drawings and initially to Figs. 1 to 3 thereof, there is provided a condensing unit, indicated generally by the reference numeral 1, for mounting on a water heating boiler 2 for forming part of a heating system of which only a system water feed pipe 4 and a system water return pipe 5 are illustrated. There is also illustrated a burner 6 mounted on the boiler 2. The boiler 2 has a boiler system water outlet 7 and a boiler system water return inlet 8. The boiler 2 has a boiler gas outlet 9 for connection to an exhaust gas flue 10 having an exhaust gas flue inlet 11 when the condensing unit 1 is not fitted. Similarly, when the condensing unit is not fitted, the boiler 2 connects directly to the system water return pipe 5. The condensing unit further comprises a main enclosure 12.

A water jacket inlet 15 is provided in the condensing unit 1, which water jacket inlet 15 is in use connected to the system water return pipe 5. The condensing unit 1 also has a water jacket outlet 16 for connection to the boiler system water return inlet 8 and also includes a condensate drain-off 17. Further, the condensing unit 1 has a gas passageway inlet 18 for connection to the boiler gas outlet 9 and a passageway outlet 19 for connection to the exhaust gas flue inlet 11. Various connections between the parts are shown by interrupted lines and arrows.

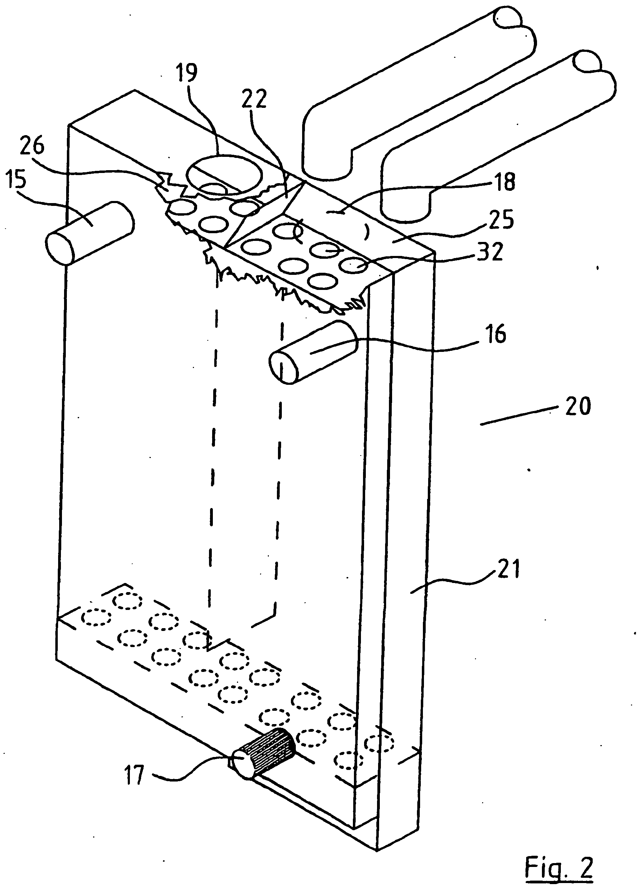

The specific embodiments shown in Figs. 2, 3, and 4 do not form part of the invention, but represent background art useful for understanding the invention.

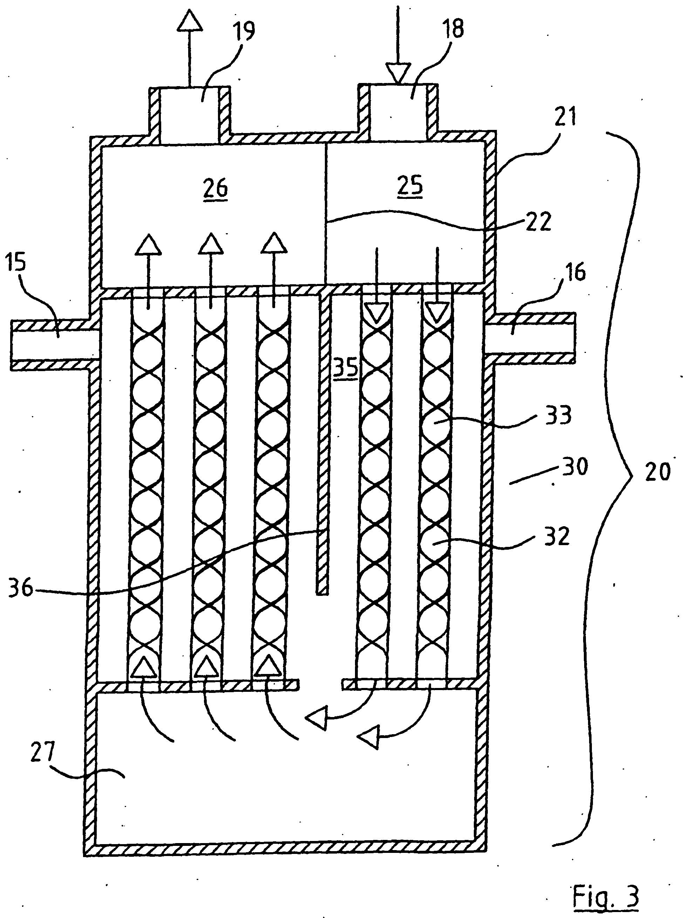

Referring now to Figs. 2 and 3, there is illustrated an exhaust gas flue passageway, indicated generally by the reference numeral 20, comprising a main manifold 21 separated by a divider plate 22 into an inlet manifold 25 and an outlet manifold 26. The exhaust gas flue passageway 20 further comprises a gas conduit, indicated generally by the reference numeral 30, connecting the inlet manifold 25 to the transfer manifold 27 and then the transfer manifold 27 to the outlet manifold 26. A water jacket 35 surrounds the gas conduit 30 and further comprises a divider plate 36.

In use, connections are made, as shown in Fig. 1, and the system water return pipe 5 delivers return water from the heating system into the water jacket inlet 15 and then out through the water jacket outlet 16 to the boiler water return inlet 8. The passageway inlet 18 is connected to the boiler gas outlet 9 and the passageway outlet 19 is connected to the exhaust gas flue inlet 11.

Thus, in operation of the boiler 2, the exhaust gases are delivered through the gas passageway inlet 18 down through the gas conduits 30, namely the tubes 32, from the inlet manifold 25 down to the transfer manifold 27 and then up through further gas conduits 30 into the outlet manifold 26 and from the outlet manifold 26 through the passageway outlet 19 and the gas flue inlet 11 into the flue 10. Thus, the exhaust gases will heat the system return water so that the water is pre-heated in the boiler. Any condensate bleeds off through the condensate drain off 17.

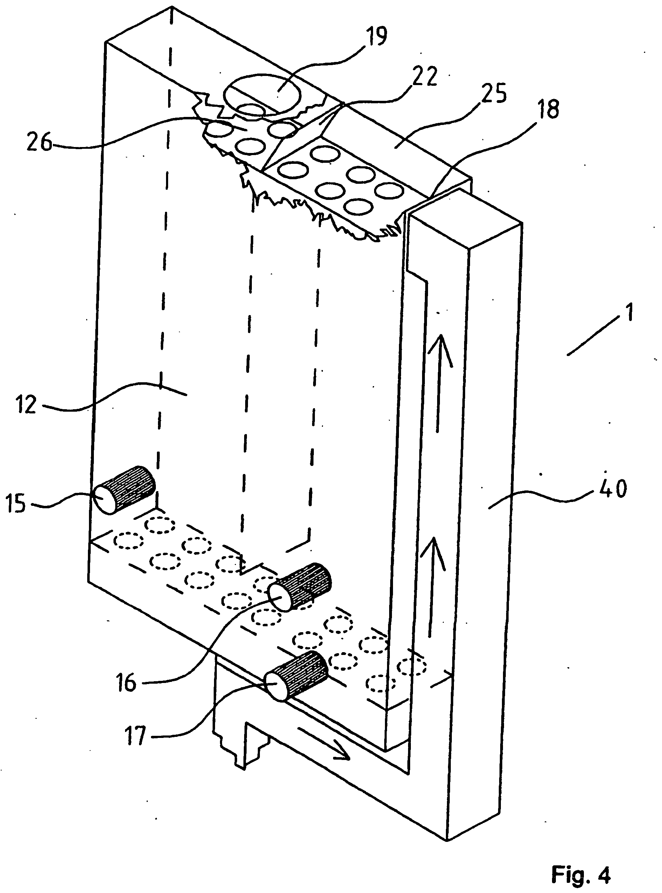

Referring to Fig. 4, there is illustrated an alternative construction of condensing unit, again indicated generally by the reference numeral 1, in which all the parts are similar to those described with reference to the previous drawings, except that in this embodiment, the condensing unit 1 may be mounted on top of a boiler and thus the passageway inlet 18 is connected by a gas transfer duct 40 to the boiler 2.

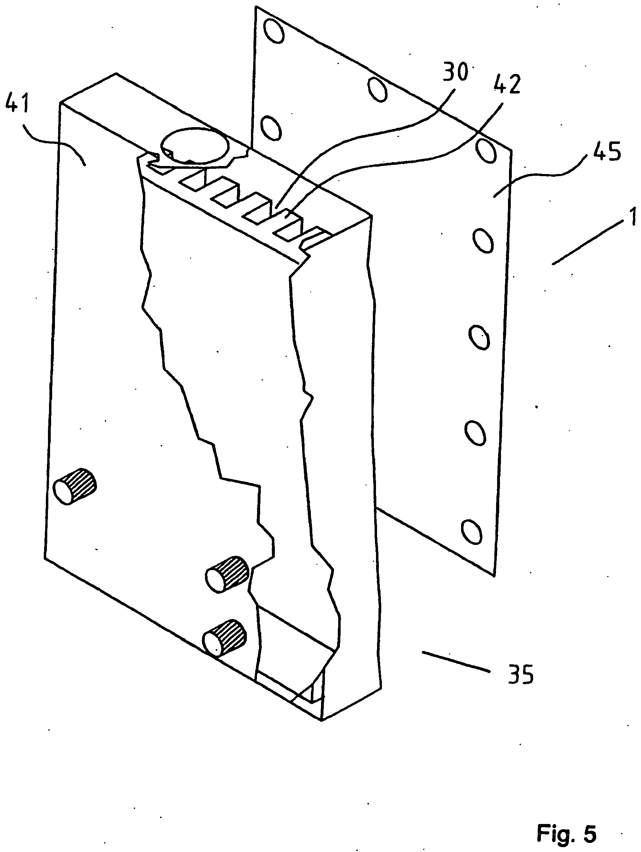

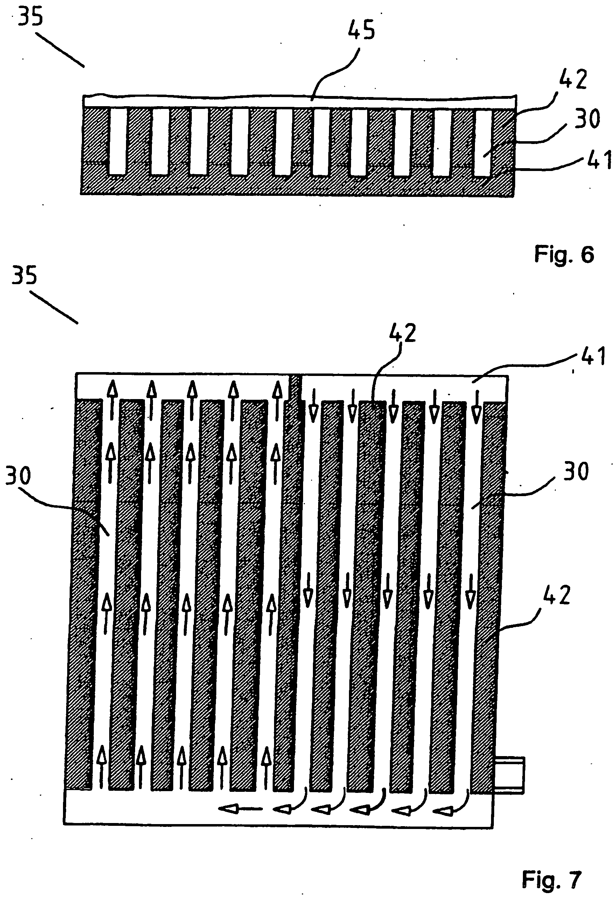

Referring to Figs. 5 to 7 inclusive, there is illustrated an alternative construction of condensing unit, again indicated generally by the reference numeral 1 and parts similar to those described with reference to the previous drawings, are identified by the same reference numerals. In this embodiment, the water jacket, again identified generally by the reference numeral 35, comprises a main tank 41 having substantially parallel extension tanks 42 projecting therefrom and abutting against a cover plate 45. The cover plate 45 and the extension tanks 42 form a plurality of gas conduits, again identified by the reference numeral 30. This condensing unit 1 may be mounted, as in either of the previous embodiments, namely, against the side of a boiler or on top of the boiler. It will also be appreciated that, for convenience, the condensing unit may be placed spaced-apart from the boiler but should not generally be too far away from it and again, parts similar to those described with reference to the previous drawings, are identified by the same reference numerals.

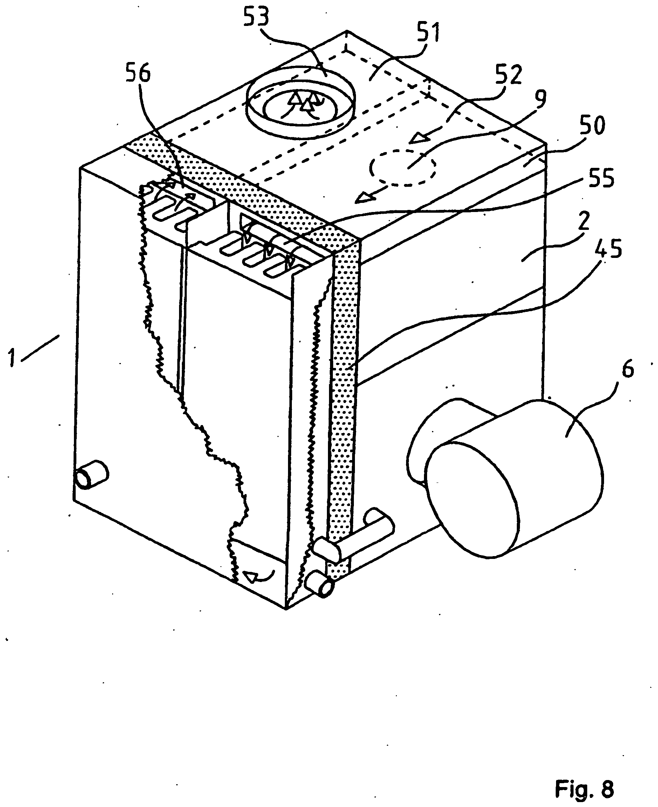

Referring to Fig. 8, there is illustrated an alternative construction of condensing unit, again indicated generally by the reference numeral 1, which is substantially similar in construction to the condensing unit of Figs. 5 to 7 inclusive, except in this embodiment, the boiler 2 is provided with a cover 50 over its boiler gas outlet (not shown), which cover 50 is effectively divided into two exhaust manifolds 51 and 52, with the manifold 51 having an exhaust outlet 53 for connection to the exhaust gas flue inlet 11. In this embodiment, the plate 45 is formed from an insulation material having a hole forming a transfer passageway 55 between the exhaust manifold 52 and the inlet manifold 25 and a further transfer passageway 56 between the outlet manifold 26 and the exhaust manifold 52.

In the specification the terms "comprise, comprises, comprised and comprising" or any variation thereof and the terms "include, includes, included and including" or any variation thereof are considered to be totally Interchangeable and they should all be afforded the widest possible interpretation and vice versa.

The invention is not limited to the embodiment hereinbefore described, but may be varied in both construction and detail within the scope of the claims.

## Claims

1. A condensing unit (1) for connection to a water heating boiler (2) in a water heating system, the boiler (2) having a boiler system water outlet (7) and a boiler system water return inlet (8) for connection respectively to a system boiler feed pipe (4) and a system water return pipe (5) and a boiler gas outlet (9) for connection to an exhaust gas flue inlet (11), the condensing unit (1) comprising a freestanding main enclosure (12) having an exhaust gas flue passageway (20) for connection between the boiler gas outlet (9) and the exhaust gas flue inlet (11), a water jacket (35) arranged for heat transfer between the water jacket (35) and the exhaust gas flue passageway (20), the water jacket (35) having a water jacket inlet (15) for connection to the system boiler return pipe (5) and a water jacket outlet (16) for connection to the boiler system return inlet (8), the exhaust gas flue passageway (20) comprises a pair of spaced-apart manifolds (21, 27), namely, a main manifold (21) divided into an inlet manifold (25) having a gas passageway inlet (18) for connection to the boiler gas outlet (9) and an outlet manifold (26) having a passageway outlet (19) for connection to the exhaust gas flue inlet (11) and a transfer manifold (27) and at least one gas transfer conduit (30) between each of the inlet and outlet manifolds (25, 26) and the transfer manifold (27); **characterised in that**:
the water jacket (35) surrounds most of the exhaust gas flue passageway (20); and
in which the water jacket (35) comprises a main tank (41) having substantially parallel extension tanks (42) projecting therefrom and abutting against a cover plate (45) of the condensing unit, the cover plate (45), extension tanks (42) and the main tank (41) forming the plurality gas conduits (30) therebetween.

2. A condensing unit (1) as claimed in claim 1, in which the cover plate (45) is in the form of another water tank communicating with the main tank.

3. A condensing unit (1) as claimed in claim 1 or 2, in which the water jacket (35) comprises an internal partial divider wall (36) dividing the water jacket (35) into two separate tanks interconnected adjacent the transfer manifold (27), one tank in contact with the gas transfer conduit (30) between the inlet and transfer manifolds (25, 27), the other with the gas transfer conduit between the outlet and transfer manifolds (27, 26).

4. A condensing unit (1) as claimed in any preceding claim in which the main enclosure (12) is adapted to lie against the side of the boiler (2) in close proximity thereto.

5. A system comprising a condensing unit (1) as claimed in any of claims 1 to 3, in combination with a gas transfer duct (40) which is provided for connection between the passageway inlet (18) and the boiler (2) to facilitate mounting the condensing unit (1) on top of a boiler (2).

6. A system comprising a condensing unit (1) as claimed in claim 1, in combination with a boiler (2) which is provided with a cover (50) over the boiler gas outlet (9) which is divided into two exhaust gas manifolds (51 and 52) with one manifold (51) having an exhaust outlet (53) for connection to the exhaust gas flue inlet (11) and wherein the cover plate (45) of the condensing unit is formed from an insulation material having a hole forming a transfer passageway (55) between the exhaust manifold (52) and an inlet manifold (25) and a further transfer passageway (56) between the outlet manifold and the exhaust manifold.

## Patentansprüche

1. Verflüssigungseinheit (1) zum Anschließen an einem Wasserheizkessel (2) in einem Wasserheizsystem, wobei der Heizkessel (2) einen Heizkesselsystem-Wasserauslass (7) und einen Heizkesselsystem-Wasserrücklaufeinlass (8) zum jeweiligen Anschließen an einem Systemheizkessel-Speiserohr (4) bzw. einem Systemwasser-Rücklaufrohr (5) und einen Heizkessel-Gasauslass (9) zum Anschließen an einem Abgasrohreinlass (11) aufweist, wobei die Verflüssigungseinheit (1) ein freistehendes Hauptgehäuse (12) mit einem Abgasrohrdurchgang (20) zum Anschließen zwischen dem Heizkessel-Gasauslass (9) und dem Abgasrohreinlass (11) umfasst, wobei ein Wassermantel (35) zur Wärmeübertragung zwischen dem Wassermantel (35) und dem Abgasrohrdurchgang (20) angeordnet ist, wobei der Wassermantel (35) einen Wassermanteleinlass (15) zum Anschließen an dem Systemheizkessel-Rücklaufrohr (5) und einen Wassermantelauslass (16) zum Anschließen an dem Heizkesselsystem-Rücklaufeinlass (8) aufweist, wobei der Abgasrohrdurchgang (20) ein Paar beabstandete Verteiler (21, 27), und zwar einen Hauptverteiler (21), der in einen Einlassverteiler (25) mit einem Gasdurchgangseinlass (18) zum Anschließen an dem Heizkessel-Gasauslass (9) und einen Auslassverteiler (26) mit einem Durchgangsauslass (19) zum Anschließen an dem Abgasrohreinlass (11) unterteilt ist, und einen Transportverteiler (27), und mindestens eine Gastransportleitung (30) zwischen jedem von dem Einlass- und dem Auslassverteiler (25, 26) und dem Transportverteiler (27) umfasst; **dadurch gekennzeichnet, dass**:
der Wassermantel (35) den Großteil des Abgasrohrdurchgangs (20) umgibt; und
wobei der Wassermantel (35) einen Hauptbehälter (41) mit im Wesentlichen parallelen Erweiterungsbehältern (42), die davon vorstehen und an einer Abdeckplatte (45) der Verflüssigungseinheit anstoßen, umfasst, wobei die Abdeckplatte (45), die Erweiterungsbehälter (42) und der Hauptbehälter (41) die Vielzahl von Gasleitungen (30) dazwischen bilden.

2. Verflüssigungseinheit (1) nach Anspruch 1, wobei die Abdeckplatte (45) in Form eines mit dem Hauptbehälter in Verbindung stehenden anderen Wasserbehälters ist.

3. Verflüssigungseinheit (1) nach Anspruch 1 oder 2, wobei der Wassermantel (35) eine interne partielle Trennwand (36) umfasst, die den Wassermantel (35) in zwei getrennte Behälter unterteilt, die dem Transportverteiler (27) benachbart miteinander verbunden sind, wobei ein Behälter mit der Gastransportleitung (30) zwischen dem Einlass- und dem Transportverteiler (25, 27) in Kontakt steht und der andere mit der Gastransportleitung zwischen dem Auslass- und dem Transportverteiler (27, 26).

4. Verflüssigungseinheit (1) nach einem der vorangehenden Ansprüche, wobei das Hauptgehäuse (12) dazu angepasst ist, an der Seite des Heizkessels (2) in unmittelbarer Nähe dazu anzuliegen.

5. System, umfassend eine Verflüssigungseinheit (1) nach einem der Ansprüche 1 bis 3, in Kombination mit einem Gastransportkanal (40), der zum Anschließen zwischen dem Durchgangseinlass (18) und dem Heizkessel (2) vorgesehen ist, um das Anbauen der Verflüssigungseinheit (1) oben auf einem Heizkessel (2) zu erleichtern.

6. System, umfassend eine Verflüssigungseinheit (1) nach Anspruch 1, in Kombination mit einem Heizkessel (2), der mit einer Abdeckung (50) über dem Heizkessel-Gasauslass (9) versehen ist, die in zwei Abgasverteiler (51 und 52) unterteilt ist, wobei ein Verteiler (51) einen Abgasauslass (53) zum Anschließen an dem Abgasrohreinlass (11) aufweist und wobei die Abdeckplatte (45) der Verflüssigungseinheit aus einem Wärmedämmmaterial gebildet ist, das ein Loch aufweist, das einen Transportdurchgang (55) zwischen dem Abgasverteiler (52) und einem Einlassverteiler (25) und einen weiteren Transportdurchgang (56) zwischen dem Auslassverteiler und dem Abgasverteiler bildet.

## Revendications

1. Groupe compresseur-condenseur (1) servant à des fins de raccordement à une chaudière de chauffage à eau (2) dans un système de chauffage à eau, la chaudière (2) ayant une sortie d'eau (7) du système de chaudière et une entrée de retour d'eau (8) du système de chaudière à des fins de raccordement respectivement à un tuyau d'alimentation (4) de la chaudière du système et à un tuyau de retour d'eau (5) du système et une sortie de gaz (9) de la chaudière à des fins de raccordement à une entrée (11) du carneau à gaz d'échappement, le groupe compresseur-condenseur (1) comportant une enceinte principale autonome (12) ayant une voie de passage (20) du carneau à gaz d'échappement à des fins de raccordement entre la sortie de gaz (9) de la chaudière et l'entrée (11) du carneau à gaz d'échappement, une chemise d'eau (35) agencée à des fins de transfert de chaleur entre la chemise d'eau (35) et la voie de passage (20) du carneau à gaz d'échappement, la chemise d'eau (35) ayant une entrée (15) de chemise d'eau à des fins de raccordement au tuyau de retour (5) de la chaudière du système et une sortie (16) de la chemise d'eau à des fins de raccordement à l'entrée de retour (8) du système de chaudière, la voie de passage (20) du carneau à gaz d'échappement comporte une paire de collecteurs (21, 27) espacés l'un de l'autre, à savoir, un collecteur principal (21) séparé en un collecteur d'entrée (25) ayant une entrée (18) de voie de passage de gaz à des fins de raccordement à la sortie de gaz (9) de la chaudière et un collecteur de sortie (26) ayant une sortie (19) de voie de passage à des fins de raccordement à l'entrée (11) du carneau à gaz d'échappement et un collecteur de transfert (27) et au moins une conduite de transfert de gaz (30) entre chacun des collecteurs d'entrée et de sortie (25, 26) et le collecteur de transfert (27) ; **caractérisé en ce que** :
la chemise d'eau (35) entoure la plus grande partie de la voie de passage (20) du carneau à gaz d'échappement ; et
dans lequel la chemise d'eau (35) comporte un réservoir principal (41) ayant des réservoirs supplémentaires sensiblement parallèles (42) faisant saillie en provenance de celui-ci et venant prendre appui contre un plateau formant couvercle (45) du groupe compresseur-condenseur, le plateau formant couvercle (45), les réservoirs supplémentaires (42) et le réservoir principal (41) formant la pluralité de conduites de gaz (30) entre eux.

2. Groupe compresseur-condenseur (1) selon la revendication 1, dans lequel le plateau formant couvercle (45) est sous la forme d'un autre réservoir d'eau en communication avec le réservoir principal.

3. Groupe compresseur-condenseur (1) selon la revendication 1 ou la revendication 2, dans lequel la chemise d'eau (35) comporte une paroi de séparation partielle interne (36) séparant la chemise d'eau (35) en deux réservoirs séparés raccordés mutuellement de manière adjacente par rapport au collecteur de transfert (27), un réservoir étant en contact avec la conduite de transfert de gaz (30) entre les collecteurs d'entrée et de transfert (25, 27), l'autre avec la conduite de transfert de gaz entre les collecteurs de sortie et de transfert (27, 26).

4. Groupe compresseur-condenseur (1) selon l'une quelconque des revendications précédentes, dans lequel l'enceinte principale (12) est adaptée pour venir reposer contre le côté de la chaudière (2) à proximité immédiate de celle-ci.

5. Système comportant un groupe compresseur-condenseur (1) selon l'une quelconque des revendications 1 à 3, en combinaison avec une canalisation de transfert de gaz (40) qui est mise en oeuvre à des fins de raccordement entre l'entrée (18) de voie de passage et la chaudière (2) pour faciliter le montage du groupe compresseur-condenseur (1) sur la chaudière (2).

6. Système comportant un groupe compresseur-condenseur (1) selon la revendication 1, en combinaison avec une chaudière (2) qui comporte un couvercle (50) sur la sortie de gaz (9) de la chaudière qui est séparé en deux collecteurs de gaz d'échappement (51 et 52) avec un collecteur (51) ayant une sortie d'échappement (53) à des fins de raccordement à l'entrée (11) du carneau à gaz d'échappement et dans lequel le plateau formant couvercle (45) du groupe compresseur-condenseur est formé à partir d'un matériau isolant ayant un trou formant une voie de passage de transfert (55) entre le collecteur d'échappement (52) et un collecteur d'entrée (25) et une autre voie de passage de transfert (56) entre le collecteur de sortie et le collecteur d'échappement.
